# EUROPÄISCHE PATENTSCHRIFT

(11) **EP 0 911 783 B1**
(45) Veröffentlichungstag und Bekanntmachung des Hinweises auf die Patenterteilung: **15.02.2006**
(21) Anmeldenummer: 98118754.5
(22) Anmeldetag: 05.10.1998
(51) Int. Cl.: G08G 1/0968, G08B 3/10, G08B 5/22

(54) **Ereignisorientiertes Speicherverwaltungsverfahren**
Event-oriented memory management method
Procédé de gestion de mémoire orientée vers les événements

(30) Priorität: 15.10.1997 DE 19745540
(43) Veröffentlichungstag der Anmeldung: 28.04.1999
(73) Patentinhaber: Nokia Corporation, 02150 Espoo (FI)
(72) Erfinder: Theimer, Wolfgang, 44795 Bochum (DE)
(74) Vertreter: Becker Kurig Straus

(56) Entgegenhaltungen:
- DE-A- 3 833 905
- DE-A- 4 123 979
- DE-A- 4 207 664
- US-A- 4 988 991
- US-A- 5 239 679
- US-A- 5 258 751
- US-A- 5 418 528

## Beschreibung

Die Erfindung betrifft ein Speicherverwaltungsverfahren, das insbesondere in einem Fahrzeugnavigationssystem verwendet werden kann.

Sprachkommandos sind eine effektive Methode, einen Fahrer durch den Verkehr zu leiten, ohne daß er zu sehr von der Verkehrssituation abgelenkt wird. Während Basiskommandos wie "links abbiegen" in beinahe allen Navigationsaufgaben vorkommen, existiert auch eine große Zahl weniger häufig benutzter akustischer Nachrichten, die nur zeitweilig wichtig sind. Audionachrichten, die von einem Fahrzeugnavigationssystem ausgegeben werden müssen, sind jedoch im allgemeinen sehr speicherintensiv. Aus diesem Grund sind heute allgemein bekannte Fahrzeugnavigationssysteme in CD-ROM's oder ROM-basierten autonomen System enthalten. Diese Systeme sind autonom in dem Sinn, daß sie keine netzbasierte Routenplanung durchführen, sondern alle Informationen im Fahrzeug haben und dort auch lokal die Routenkalkulation erfolgt. Ein Nachteil derartiger Fahrzeugnavigationssysteme ist folglich der komplett festgelegte Dialog, der nur durch Austausch der CD-ROM oder des ROM-Chips verändert werden kann.

Aus der US 5,239,679 ist eine Telekommunikationsvorrichtung bekannt, die in der Lage ist empfangene Nachrichten zu speichern und diese Nachrichten in programmierbaren Intervallen zu löschen. Diese Vorrichtung umfasst einen Speicherschaltkreis zum Speichern einer empfangenen Nachricht, einen Zeitschaltkreis, einen Eingabeabschnitt und einen Nachrichten-löschen-Schaltkreis. Der Eingabeabschnitt umfasst dabei einen Anzeigeschalter, einen Steuerschalter, einen Zeitsetzschalter und einen Inkrementschalter zur Eingabe entsprechender Befehle und Steuerkommandos. Dabei dient der Zeitsetzschalter zum Stellen eines ersten Zeitgebers auf das aktuelle Datum und die aktuelle Uhrzeit, um so eine eingehende Nachricht mit einem Zeitstempel zu versehen. Der Inkrementschalter dient zum Einstellen einer Zeit nach der die empfangene Nachricht automatisch im Speicher gelöscht wird.

Ferner ist aus der DE 42 07 664 A1 eine Zusatzkomponente für Radiogeräte, insbesondere für Autoradios bekannt, die zur Zwischenspeicherung von Verkehrslageberichten im Rahmen des etablierten Verkehrsfunksystems dient. Um Verkehrsnachrichten empfängerseitig speichern zu können, ist beispielsweise ein als Rundpuffer organisierter Speicher vorgesehen. Den aufgezeichneten Verkehrslageberichten kann ein Zeitstempel mitgegeben werden, sodass veraltete Informationen nach einer fest eingestellten oder frei wählbaren Zeitspanne automatisch gelöscht werden. Beim Eintreffen neuer Nachrichten überschreiben diese entweder die vorherige Aufzeichnung oder werdem an diese angehängt.

Bei einem anderen bekannten Verfahren zum Speichern von empfangenen Nachrichten (US 5,418,528), wird eine neue Nachricht zunächst mit einem Zeitstempel, der den Empfangszeitpunkt darstellt, versehen. Falls nicht genügend Speicherplatz vorhanden ist, werden in Abhängigkeit von weiteren Kriterien - wie Nachricht gelesen oder nicht-gelesen. Nachricht verankert oder nicht-verankert - Nachrichten beginnend mit der ältesten solange gelöscht, bis genügend Speicher für die neue Nachricht vorhanden ist. Hier werden also gespeicherte Nachrichten in Abhängigkeit von ihrem Alter gelöscht.

Beispielsweise werden bei der Routenführung in einem Navigationssystem bestimmte Ansagen, die von einem Service-Provider zu dem Benutzer-Endgerät übertragen werden, immer wieder benötigt, sodass die entsprechende Nachrichten mit einer sehr langen Lebenszeit versehen werden, während andere Nachrichten nur ein- oder wenige male innerhalb einer kurzen Zeitspanne benötigt werden, sodass diese auch wieder schnell gelöscht werden können.

Aufgabe der Erfindung ist es, ein Speicherverwaltungsverfahren zu schaffen, mit dem es möglich ist, auch mit einem kleinen Speicher speicherintensive Daten, wie zum Beispiel Audiodaten, auf effiziente Weise zu verwalten.

Die Lösung der gestellten Aufgabe ist dem Patentanspruch 1 zu entnehmen. Vorteilhafte Ausgestaltungen der Erfindung sind in den Unteransprüchen dargestellt.

Ein Speicherverwaltungsverfahren gemäß der Erfindung zeichnet sich dadurch aus, daß in Nachrichten von einem Service-Provider, die empfängerseitig in einen Speicher einzuschreiben sind, jeweils ihre Lebenszeit enthalten ist, und daß ferner bei vollem Speicher und Eintreffen weiterer Nachrichten diejenigen gespeicherten Nachrichten gelöscht werden, deren Lebenszeit am längsten abgelaufen ist.

Die Lebenszeit gibt Auskunft darüber, wie wichtig, d. h. wie wahrscheinlich es ist, daß die jeweilige im Speicher abgelegte Nachricht wiedergegeben werden muß. Dabei können die Lebenszeiten auch herauf- oder herabgesetzt werden, falls erforderlich oder gewünscht.

Nach der Wiedergabe einer Nachricht wird diese so lange im Speicher gehalten, bis beim Eintreffen neuer Nachrichten der Speicher voll ist. Dann werden bei Eintreffen neuer Nachrichten diejenigen Nachrichten gelöscht, deren Lebenszeit am längsten abgelaufen ist, bis wieder genügend Speicherplatz für die neuen Nachrichten vorhanden ist.

Die Nachrichten, denen Lebenszeiten zugeordnet werden, können zum Beispiel Audiodaten, Videodaten oder andere speicherintensive Daten enthalten.

Nach einer Weiterbildung der Erfindung endet der Löschprozeß, wenn genügend freier Speicherraum für die weiteren Nachrichten vorhanden ist. Auf diese Weise wird sichergestellt, daß nur so viele Nachrichten aus dem Speicher gelöscht werden, wie für neue Nachrichten benötigt wird. Dadurch wird eine effiziente und vollständige Nutzung des Speichers garantiert.

Nach einer anderen Weiterbildung der Erfindung endet der Löschprozeß, wenn die Gesamtspeichergröße für die weiteren Nachrichten zu klein ist. In diesem Fall werden die weiteren Nachrichten verworfen, so daß die bereits im Speicher vorhandenen Nachrichten weiter zur Verfügung stehen.

Nach einer Ausgestaltung der Erfindung erhalten Nachrichten, die schon ausgelesen worden sind, eine reduzierte Lebenszeit. Nachrichten, die bereits ausgelesen wurden, sind häufig nicht mehr so bedeutsam, so daß durch Reduzierung ihrer Lebenszeit diesem Umstand Rechnung getragen werden kann.

Nach einer weiteren Ausgestaltung der Erfindung kann die Lebenszeit einer schon ausgelesenen Nachricht auch auf den Wert Null gesetzt werden. Somit lassen sich seltene Nachrichten, die schon abgespielt worden sind, beispielsweise im Bereich der Fahrzeugnavigation, zuerst löschen, da ihre nochmalige Wiedergabe praktisch unwahrscheinlich ist.

Nach einer noch weiteren Ausgestaltung der Erfindung werden die im Speicher gespeicherten Nachrichten nach ihren Lebenszeiten sortiert. Das Sortieren kann dabei in auf-/ absteigender Reihenfolge bezüglich der Werte der Lebenszeiten erfolgen. Auf diese Weise kann die älteste Nachricht, die sich zum Beispiel am Ende des Speichers befindet, als zusammenhängender Block gelöscht werden, falls die Länge der Nachricht bekannt ist.

Das Sortieren der im Speicher gespeicherten Nachrichten erfolgt vorzugsweise nach jeder im Speicher ankommenden Nachricht. Alternativ wäre es auch denkbar, die Liste der im Speicher abgelegten Nachrichten nach Ablauf vorbestimmter Zeitintervalle zu sortieren.

Nach einer vorteilhaften Ausgestaltung der Erfindung werden die in den Speicher einzuschreibenden Nachrichten von einem Service-Provider über eine Luftschnittstelle verschickt. Dies hat den Vorteil, daß zunächst nur grundlegende Nachrichten, zum Beispiel Navigationsnachrichten, in einer gewünschten Sprache vom Service-Provider während der Installation geladen werden müssen. Andere situationsspezifische Nachrichten, die nicht so häufig benutzt werden, können dann bei Bedarf vom Service-Provider verschickt werden. Desweiteren ist es möglich, ein das Speicherverwaltungsverfahren verwendendes System auf einfache Weise zu aktualisieren.

Nach einer weiteren bevorzugten Ausgestaltung der Erfindung ist die Lebenszeit einer Nachricht jeweils in einem Kopf dieser Nachricht enthalten. Somit muß nicht die gesamte Nachricht zum Beispiel nach der Lebenszeit durchsucht werden, um diese zu ändern oder zu aktualisieren.

Der Kopf einer Nachricht kann ferner zusätzliche Kopfvariable enthalten, aufgrund derer die jeweiligen Nachrichten wiedergegeben werden, falls die Kopfvariablen in vorbestimmten Wertebereichen liegen oder vorbestimmte Schwellwerte überschreiten.

Darüber hinaus ist es denkbar, daß jede Nachricht mehr als nur ein Kopffeld enthält, falls dies für die Verwaltung der speziell verwendeten Nachrichten notwendig ist.

Im folgenden wird unter Bezugnahme auf die beigefügten Zeichnungen ein in einem Fahrzeugnavigationssystem verwendetes Ausführungsbeispiel der Erfindung näher beschrieben. Es zeigen:
**Figur 1** eine Tabelle mit den im Kopffeld einer Nachricht i enthaltenen Kopfvariablen;
**Figur 2** das Konzept des Speicherverwaltungsverfahrens für Nachrichten i gemäß dem Ausführungsbeispiel nach Figur 1; und
**Figur 3** eine Hardware-Realisierung eines Fahrzeugnavigationssystems, in dem das erfindungsgemäße Speicherverwaltungsverfahren verwendet wird.

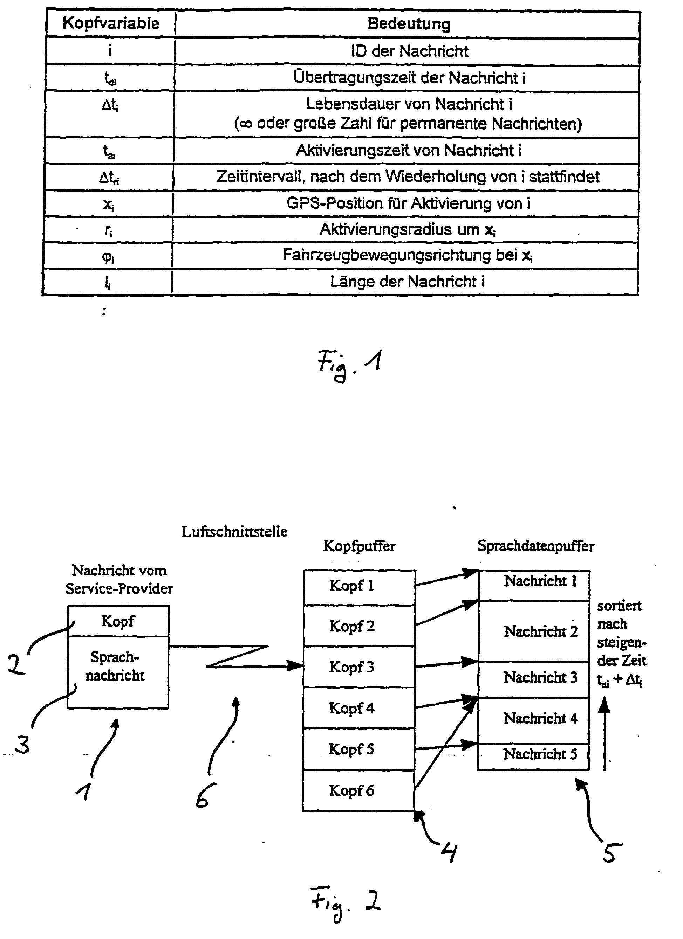

Figur 1 zeigt eine Tabelle, in der die im Kopffeld einer Nachricht i enthaltenen Kopfvariablen aufgelistet sind. Im einzelnen haben die Kopfvariablen folgende Bedeutung.

Die Kopfvariable i verweist auf eine ID (Identität) einer Nachricht i, wonach jede Nachricht eindeutig identifizierbar ist. Weitere im Kopf einer Nachricht i enthaltene Kopfvariable sind die Übertragungszeit t_{di} einer Nachricht i vom Service-Provider in den Speicher, sowie die Lebensdauer Δtᵢ einer Nachricht i. Die Lebensdauer einer Nachricht i ist gleichbedeutend mit der Lebenszeit der Nachricht i, d. h. sie gibt Auskunft darüber, mit welcher Wahrscheinlichkeit die jeweilige Nachricht von einer neuen im Speicher abzulegenden Nachricht überschrieben wird, falls der Speicher voll ist. Soll zum Beispiel die Nachricht i permanent im Speicher verbleiben, so muß der Wert für die Kopfvariable Δtᵢ sehr groß gewählt werden oder aber gegen Unendlich gehen. Das Kopffeld der im Ausführungsbeispiel verwendeten Nachrichten enthält ferner die Kopfvariable tₐᵢ, um eine Nachricht i zu einer bestimmten Zeit zu aktivieren. Zur wiederholten Wiedergabe einer Nachricht i gibt eine weitere Kopfvariable Δtᵣᵢ ein Zeitintervall an, nachdem eine Wiederholung der Nachricht i erfolgt. Um eine bestimmte Nachricht i mit Erreichen einer bestimmten GPS-Position zu aktivieren, enthält das Kopffeld der Nachricht i ferner eine Kopfvariable xᵢ. Da bestimmte Nachrichten schon in der Nähe einer bestimmten GPS-Position wiedergegeben werden müssen, ist dafür eine weitere Kopfvariable rᵢ vorgesehen, die einen Aktivierungsradius um die GPS-Position xᵢ für die Aktivierung der Nachricht i festlegt. In manchen Fällen ist ferner von Bedeutung, ob sich das Fahrzeug in einer bestimmten Richtung bei einer GPS-Position bewegt. Aus diesem Grund ist eine weitere Kopfvariable ϕᵢ vorgesehen, die die Fahrzeugbewegungsrichtung bei einer GPS-Position xᵢ für die Aktivierung einer Nachricht i definiert. Letztendlich enthält der Kopf einer Nachricht i ferner die Kopfvariable lᵢ, in der die Länge der Nachricht i enthalten ist.

Eine akustische Nachricht besteht aus einem Kopffeld (Header) und einem Datenfeld, in dem Sprachdaten, Sprachkennungsparameter oder andere Binärdateien enthalten sein können. Falls die Sprachnachricht komprimiert vorliegt, wird sie in einem Fahrzeugterminal dekodiert, was normalerweise weniger Rechenzeit erfordert als mit einem Sprachdecoder im Netzwerk. Dabei determiniert der Nachrichtenkopf, in dem die Kopfvariablen enthalten sind, die Aktivierungsbedingungen des Sprachkommandos.

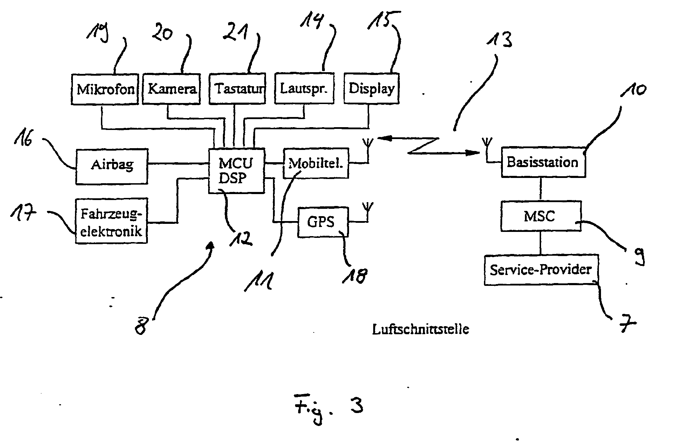

Die Figur 2 zeigt das Speicherkonzept des Speicherverwaltungsverfahrens gemäß dem Ausführungsbeispiel nach Figur 1. Wie darin gezeigt, enthält eine vom Service-Provider gesendete Nachricht 1 das Kopffeld 2 sowie ein die Sprachnachricht enthaltendes Datenfeld 3. Dabei wird die in Kopf und Daten zerlegte Nachricht in zwei unterschiedliche Datenpuffer, nämlich in einen Kopfpuffer 4 und in einen Sprachdatenpuffer 5 geschrieben, nachdem die Nachricht vom Service-Provider über eine Luftschnittstelle 6 zum Beispiel an ein Fahrzeugnavigationssystem übertragen worden ist.

Nachdem permanente Nachrichten während der Systeminitialisierung in der spezifizierten Sprache geladen wurden, wird der Speicher mit transienten Nachrichten ohne Löschen gefüllt. Sobald der aus Kopf- und Sprachdatenpuffer gebildete Speicher voll ist, tritt das sogenannte "Lebensdauer-Konzept" in Erscheinung. Dies bedeutet, daß zuerst der Kopf 2 einer neuen Nachricht 1 in einen Puffer geladen und die Länge l₁ der aktuellen Nachricht ausgewertet wird. Daher ist es einfach, im Kopfpuffer 4 Zeiger auf den Anfang jeder im Sprachdatenpuffer gespeicherten Nachricht zu definieren. Danach werden alle Nachrichten, deren Lebenszeiten am längsten abgelaufen sind, gelöscht, wobei sich die älteste Nachricht am Ende des Sprachdatenpuffers 5 befindet und folglich als zusammenhängender Block gelöscht werden kann, falls Speicherplatz für eine neue Nachricht benötigt wird. Folglich besitzt in Figur 2 die Nachricht "1" die längste Lebensdauer, während die Nachricht "5" zuerst gelöscht wird. Der Löschprozeß bricht ab, wenn genügend freier Speicherplatz verfügbar ist oder die Gesamtspeichergröße zu klein ist.

Figur 2 zeigt die Datenstruktur für eine Situation mit fünf Nachrichten. Nachricht "1" besitzt die längste Lebensdauer, während Nachricht "5" der erste Kandidat für den Löschvorgang ist. Nachricht 6 verweist auf das Datenfeld einer permanent vorhandenen Nachricht 4, wodurch sie folglich nicht neu geladen werden muß und keinen zusätzlichen Datenspeicher verbraucht.

Die Datenübertragung vom Service-Provider zum Fahrzeugnavigationssystem, in dem das erfindungsgemäße Speicherverwaltungsverfahren verwendet wird, kann dadurch minimiert werden, daß das System nach jedem Löschen einer Nachricht dem Service-Provider die ID dieser Nachricht zurückmeldet. Im Netz wird dann ein Protokoll der letzten Übertragung gespeichert, so daß nur selektiv die verlorengegangenen Nachrichten neu geschickt werden müssen.

Gemäß dem "Lebensdauer-Speicherkonzept" nach Figur 2 erhalten seltene Nachrichten, die schon abgespielt worden sind, eine reduzierte Lebenszeit Δtᵢ (typisch für Fahrzeugnavigation). Eine Nachricht, die durch eine GPS-Position getriggert wird, erhält initial einen hohen Wert für die Aktivierungszeit tₐᵢ (tₐᵢ >> t_{di}), wodurch die Wahrscheinlichkeit für ein Überschreiben dieser Nachricht relativ klein ist, da zuerst die Nachrichten i mit i = arg min (tₐᵢ + Δtᵢ) für alle i gelöscht werden.

Die Aktivierung von Sprachnachrichten kann durch eine Kombination von Ereignissen ausgelöst werden, was im folgenden näher beschrieben wird. Die einfachste Aktivierung einer Sprachnachricht erfolgt durch Angabe einer Aktivierungszeit tₐᵢ für die Nachricht i. Falls t ≥ tₐᵢ und t < tₐᵢ + Δtᵢ, wird die Nachricht i ausgegeben, wobei t die aktuelle Zeit darstellt. Nach der Aktivierung der Sprachnachricht wird die Lebenszeit der Nachricht i auf Null gesetzt, so daß ein Löschen der Nachricht wahrscheinlich wird. Eine Anwendung dieser Wecker-Funktionalität ist z. B. das Abspielen eines Memos zu definierter Zeit.

Eine andere Anwendung besteht in der periodischen Aktivierung einer Warnnachricht im Falle von Fahrzeugfehlern oder anderen Problemen, die vom System erkannt werden. Dabei wird eine Nachricht i periodisch nach Intervallen der Länge Δtᵣᵢ abgespielt, so lange t ≥ tₐᵢ und t < tₐᵢ + Δtᵢ ist.

In einem anderen Szenario wird die Nachricht i getriggert, wenn sich das Fahrzeug einer GPS-Position xᵢ bis auf einen Radius rᵢ genähert hat. Die Lebensdauer Δtᵢ der Nachricht ist initial sehr groß, wobei die Nachricht i ausgegeben wird, wenn |x - xᵢ| ≤ rᵢ und Δtᵢ > 0 ist. Dabei stellt x die aktuelle Fahrzeugposition dar. Diese positionsabhängige Aktivierung ist typisch für Routenplanung, bei der das System den Fahrer mit Fahrhinweisen an speziellen Straßenverzweigungen leitet. Der Radius sollte proportional zur Fahrzeuggeschwindigkeit sein, um eine angemessene Reaktionszeit zu berücksichtigen.

Da die Richtung des Fahrzeugs auf einer Straße vollständig die optimale Routenplanung ändern kann, ist ein Orientierungswinkel ϕᵢ optional zum Kopf der Nachricht hinzugefügt. Nur wenn die Winkeldifferenz zwischen der Fahrzeugrichtung ϕ und der geplanten Richtung ϕᵢ kleiner als ein Schwellenwert Δϕ ist, ist die Nachricht zulässig und sollte wiedergegeben werden. Dies bedeutet, daß die Nachricht 1 wiedergegeben wird, wenn |x - xᵢ| ≤ rᵢ und |ϕ - ϕᵢ| ≤ Δϕ und Δtᵢ > 0 sind, wobei die Aktivierungszeit tₐᵢ gleich der Übertragungszeit t_{di} der Nachricht i und die Lebensdauer Δtᵢ gleich Null gesetzt werden. Dies führt zu einer Aktivierung der Nachricht in einem zirkularen Segment um xᵢ mit ϕᵢ als bevorzugter Orientierung und einer Winkelausdehnung von 2Δϕ.

Die o. g. Bedingungen zur Aktivierung von Sprachnachrichten können ferner beliebig erweitert oder aber miteinander kombiniert werden.

Figur 3 zeigt eine Hardware-Realisierung eines Fahrzeugnavigationssystems, in dem das erfindungsgemäße Speicherverwaltungsverfahren verwendet werden kann.

Die darin gezeigte Implementierung des Fahrzeugnavigationssystems nutzt WEB-Technologie. Der Service-Provider 7 kommuniziert mit einem Fahrzeugterminal 8 via HTTP (hypertext transfer protocol), das auf dem Mobilfunkdatenlink aufbaut. Der Service-Provider 7 überträgt die zu sendenden Nachrichten über ein MSC 9 und eine Basisstation 10 an ein mit dem Fahrzeugnavigationssystem gekoppeltes Mobiltelefon 11.

Ein Fahrzeugdienstprogramm nutzt einen vermittelnden WEB-Server 12, um eine HTTP-Verbindung über die Luftschnittstelle 13 aufzubauen. Die Verarbeitung der Sprachdaten erfolgt dann ausschließlich im Applikationsprogramm.

Zur optischen und/oder akustischen Ausgabe von Nachrichten ist die als WEB-Server dienende Mikroprogrammsteuereinheit MCU 12 mit einem Lautsprecher 14 und/oder einem Display 15 verbunden. Ferner erhält die MCU kontinuierlich Daten von einem Airbag 16 sowie von der Fahrzeugelektronik 17. Diese Daten können zum Beispiel dazu verwendet werden, um periodisch Warnsignale über den Lautsprecher 14 oder das Display 15 auszugeben, falls Fahrzeugfehler oder andere Probleme auftreten. Auf gleiche Weise kann bei einem Notfall über das Mobiltelefon 11 und die Luftschnittstelle 13 der Service-Provider 7 benachrichtigt werden.

Wie Figur 3 ferner zeigt, ist die MCU 12 mit einem GPS-Empfänger 18 verbunden, um so jederzeit die aktuelle Fahrzeugposition bestimmen zu können, was für eine Fahrzeugnavigation von entscheidender Bedeutung ist.

Zur Kommunikation eines Benutzers mit der MCU enthält das Fahrzeugnavigationssystem ferner ein Mikrophon 19, eine Kamera 20 sowie eine Tastatur 21.

Eine andere Anwendungsmöglichkeit des erfindungsgemäßen Speicherverwaltungsverfahrens liegt zum Beispiel in dem Laden einer situationsspezifischen sprecherunabhängigen Wortschatzergänzung zur Spracherkennung aus dem Mobilfunknetz. In diesem Fall bleibt ein Basisvokabular permanent aktiv, wobei abhängig von der Situation neue Wörter hinzugefügt werden können. Die Erkennungsparameter dieser Kommandos werden bei Bedarf geladen und vergrößern temporär den Wortschatz.

Ebenso ist es mit Hilfe des erfindungsgemäßen Speicherverwaltungsverfahrens möglich, kontextabhängige Wortschatzerweiterungen zur Spracherkennung zu laden, um so den Fahrer zu unterstützen. Ein ausländischer Gastfahrer kann dann seine Sprache auswählen und damit das Gerät bedienen, wenn die Sprachkommandos in seiner Sprache vom Service-Provider geladen werden. Damit ist auch eine bilinguale Bedienung möglich.

Ferner können spezielle Sprachkommandos eingeführt werden, selbst nachdem das System verkauft wurde. Falls das Fahrzeugterminal die Modifikation der Benutzerschnittstelle unterstützt, kann auch das erkannte Vokabular geändert werden, um die neue Benutzerschnittstelle zu realisieren.

Desweiteren könnte der Speicher Verkehrsnachrichten mit regionalem Fokus beinhalten, wobei zuerst alle Verkehrsnachrichten empfangen werden und anschließend Nachrichten, deren Orte von der aktuellen Fahrzeugposition innerhalb eines definierten Radius entfernt liegen, eine höhere Lebensdauer Δtᵢ erhalten.

Mit dem erfindungsgemäßen Speicherverwaltungsverfahren kann folglich ein relativ kleiner Speicher verwendet werden, was insbesondere für Low-End-Produkte relevant ist, für die das Lebensdauerkonzept von Nachrichten einen großen Vorteil bietet. Es ist weiterhin denkbar, daß die Gesamtgröße des Speichers in Abhängigkeit von der Anzahl der Applikationen mit ihrem Speicherbedarf dynamisch angepaßt wird. Aber auch für High-End-Systeme ist das Konzept bei großem Speicher von Wichtigkeit, wenn audiovisuelle Multimedia-Nachrichten verschickt werden. Der Speicherbedarf für solche Nachrichten kann schnell den verfügbaren Speicherplatz überschreiten.

## Patentansprüche

1. Speicherverwaltungsverfahren, bei dem
- in Nachrichten von einem Service-Provider, die empfängerseitig in einen Speicher einzuschreiben sind, jeweils ihre Lebenszeit enthalten ist, und
- ferner bei vollem Speicher und Eintreffen weiterer Nachrichten diejenigen gespeicherten Nachrichten gelöscht werden, deren Lebenszeit am längsten abgelaufen ist.

2. Speicherverwaltungsverfahren nach Anspruch 1, **dadurch gekennzeichnet, daß** der Löschprozeß endet, wenn genügend freier Speicherraum für die weiteren Nachrichten vorhanden ist.

3. Speicherverwaltungsverfahren nach Anspruch 1, **dadurch gekennzeichnet, daß** der Löschprozeß endet, wenn die Gesamtspeichergröße für die weiteren Nachrichten zu klein ist.

4. Speicherverwaltungsverfahren nach einem der Ansprüche 1 bis 3, **dadurch gekennzeichnet, daß** Nachrichten, die schon ausgelesen worden sind, eine reduzierte Lebenszeit erhalten.

5. Speicherverwaltungsverfahren nach nach Anspruch 4, **dadurch gekennzeichnet, daß** die reduzierte Lebenszeit auf Null gesetzt wird.

6. Speicherverwaltungsverfahren nach einem der Ansprüche 1 bis 5, **dadurch gekennzeichnet, daß** im Speicher gespeicherte Nachrichten nach ihren Lebenszeiten sortiert werden.

7. Speicherverwaltungsverfahren nach einem der Ansprüche 1 bis 6, **dadurch gekennzeichnet, daß** die Lebenszeit einer Nachricht in einem Kopf dieser Nachricht enthalten ist.

8. Verfahren nach einem der Ansprüche 1 bis 7, **dadurch gekennzeichnet, daß** die empfängerseitig in den Speicher einzuschreibenden Nachrichten von einem Service-Provider über eine Luftschnittstelle verschickt werden.

9. Vorrichtung zur Verwaltung eines Speichers mit
- Mitteln zum Löschen von denjenigen empfängerseitig in den Speicher eingeschriebenen, jeweils ihre Lebenszeit enthaltenden Nachrichten von einem Service-Provider, deren Lebenszeit am längsten abgelaufen ist, wenn bei vollem Speicher weitere Nachrichten eintreffen.

10. Vorrichtung nach Anspruch 9, **gekennzeichnet durch** Mittel zum Beenden des Löschprozeßes, wenn genügend freier Speicherraum für die weiteren Nachrichten vorhanden ist oder wenn die Gesamtspeichergröße für die weiteren Nachrichten zu klein ist.

11. Vorrichtung nach Anspruch 9 oder 10, **gekennzeichnet durch** Mittel zum Reduzieren der Lebenszeit von Nachrichten, die schon ausgelesen worden sind, wobei die reduzierte Lebenszeit vorzugsweise auf Null gesetzt wird.

12. Vorrichtung nach Anspruch 9, 10 oder 11, **gekennzeichnet durch** Mittel zum Sortieren der im Speicher gespeicherte Nachrichten nach ihren Lebenszeiten.

## Claims

1. Method of managing a memory in which
- messages from a service-provider to be written to a memory at a receiver end respectively contain their lifetime and
- if the memory is full and other messages arrive, the messages whose lifetime has elapsed by the longest time are erased.

2. Method of managing a memory as claimed in claim 1, **characterised in that** the erasure process terminates when sufficient free memory space is available for the other messages.

3. Method of managing a memory as claimed in claim 1, **characterised in that** the erasure process terminates if the total memory size is too small for the other messages.

4. Method of managing a memory as claimed in one of claims 1 to 3, **characterised in that** messages which have already been read are assigned a shorter lifetime.

5. Method of managing a memory as claimed in claim 4, **characterised in that** the shorter lifetime is set to zero.

6. Method of managing a memory as claimed in one of claims 1 to 5, **characterised in that** messages stored in the memory are sorted on the basis of their lifetimes.

7. Method of managing a memory as claimed in one of claims 1 to 6, **characterised in that** the lifetime of a message is contained in a header of this message.

8. Method as claimed in one of claims 1 to 7, **characterised in that** the messages to be written to the memory at the receiver end are sent by a service-provider via an air interface.

9. Device for managing a memory comprising
- means for erasing those messages from a service-provider written to the memory at the receiver end, respectively containing their lifetime, whose lifetime has expired by the longest if other messages arrive and the memory is full.

10. Device as claimed in claim 9, **characterised by** means for terminating the erasure process if sufficient free memory space is available for the other messages or if the total memory size is too small for the other messages.

11. Device as claimed in claim 9 or 10, **characterised by** means for shortening the lifetime of messages which have already been read, in which case the shortened lifetime is preferably set to zero.

12. Device as claimed in claim 9, 10 or 11, **characterised by** means for sorting the messages stored in the memory on the basis of their lifetimes.

## Revendications

1. Procédé de gestion de mémoire, dans lequel :
- dans des informations venant d'un fournisseur de service, devant être enregistrées côté récepteur en une mémoire, est chaque fois contenue sa durée de vie, et
- en outre, lorsque la mémoire est pleine et que d'autres informations arrivent, on procède à l'effacement des informations mémorisées, dont la durée de vie est arrivée au stade d'expiration le plus long.

2. Procédé de gestion de mémoire selon la revendication 1, **caractérisé en ce que** le processus d'effacement s'achève lorsqu'il y a suffisamment d'espace mémoire libre pour les autres informations.

3. Procédé de gestion de mémoire selon la revendication 1, **caractérisé en ce que** le processus d'effacement s'achève lorsque la taille de mémoire globale est trop petite pour les autres informations.

4. Procédé de gestion de mémoire selon l'une des revendications 1 à 3, **caractérisé en ce que** des informations ayant déjà été lues reçoivent une durée de vie réduite.

5. Procédé de gestion de mémoire selon la revendication 4, **caractérisé en ce que** la durée de vie réduite est fixée à zéro.

6. Procédé de gestion de mémoire selon l'une des revendications 1 à 5, **caractérisé en ce que** des informations stockées en mémoire sont triées d'après leurs durées de vie.

7. Procédé de gestion de mémoire selon l'une des revendications 1 à 6, **caractérisé en ce que** la durée de vie d'une information est contenue dans une en-tête de cette information.

8. Procédé de gestion de mémoire selon l'une des revendications 1 à 7, **caractérisé en ce que** les informations, à enregistrer dans la mémoire côté récepteur, sont envoyées par un fournisseur de service, par une interface aérienne ou hertzienne.

9. Dispositif de gestion d'une mémoire, comprenant
- des moyens pour effacer des informations contenant chaque fois une durée de vie, ayant été inscrites dans la mémoire côté réception et venant d'un fournisseur de services, informations dont la durée de vie est arrivée au stade d'expiration le plus long, lorsque d'autres informations arrivent alors que la mémoire est pleine.

10. Dispositif selon la revendication 9, **caractérisé par** des moyens pour achever le processus d'effacement, si suffisamment d'espace de mémoire libre existe pour les autres informations, ou si la taille de mémoire globale est trop petite pour les autres informations.

11. Dispositif selon la revendication 9 ou 10, **caractérisé par** des moyens pour réduire la durée de vie d'informations ayant déjà été lues, la durée de vie réduite, de préférence, étant posée à zéro.

12. Dispositif selon la revendication 9, 10 ou 11, **caractérisé par** des moyens pour trier d'après leur durée de vie les informations ayant été stockées en mémoire.
